(19) Europäisches Patentamt
European Patent Office
Office européen des brevets

(11) **EP 4 052 321 B1**

(12) **EUROPÄISCHE PATENTSCHRIFT**

(45) Veröffentlichungstag und Bekanntmachung des Hinweises auf die Patenterteilung:
**16.08.2023 Patentblatt 2023/33**

(21) Anmeldenummer: **20803743.2**

(22) Anmeldetag: **28.10.2020**

(51) Internationale Patentklassifikation (IPC):
*H01M 10/44* (2006.01)    *H01M 10/48* (2006.01)
*H02J 7/00* (2006.01)    *H01M 10/42* (2006.01)

(52) Gemeinsame Patentklassifikation (CPC):
**H01M 10/441; H01M 10/482; H02J 7/0016; H02J 7/005; H02J 7/007182;** H01M 2010/4271; H01M 2220/10; Y02E 60/10; Y02T 10/70

(86) Internationale Anmeldenummer:
**PCT/DE2020/100922**

(87) Internationale Veröffentlichungsnummer:
**WO 2021/083461 (06.05.2021 Gazette 2021/18)**

(54) **VERFAHREN ZUM AUFLADEN UND/ODER ENTLADEN EINES WIEDERAUFLADBAREN ENERGIESPEICHERS**

METHOD FOR CHARGING AND/OR DISCHARGING A RECHARGEABLE ENERGY STORE

PROCÉDÉ POUR CHARGER ET/OU DÉCHARGER UN ACCUMULATEUR D'ÉNERGIE RECHARGEABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.10.2019 DE 102019129415**

(43) Veröffentlichungstag der Anmeldung:
**07.09.2022 Patentblatt 2022/36**

(73) Patentinhaber: **Benning CMS Technology GmbH 79232 March (DE)**

(72) Erfinder: **WALTER, Wolfram 79427 Eschbach (DE)**

(74) Vertreter: **Geitz Patentanwälte PartGmbB Patentanwälte PartGmbB Werthmannstrasse 15 79098 Freiburg (DE)**

(56) Entgegenhaltungen:
**EP-A1- 2 966 751    DE-A1-102015 202 939**

**Beschreibung**

Die Erfindung betrifft ein Verfahren zum Laden und Entladen eines wiederaufladbaren Energiespeichers, wobei der Energiespeicher mindestens einen Zellblock mit einer Anzahl J von in Reihe geschalteten Batteriezellen aufweist.

Ein Energiespeicher umfasst mehrere in Reihe oder parallel geschaltete galvanische Zellen, die als Batteriezellen bezeichnet werden. Bei der Entladung der Batteriezellen wird gespeicherte chemische Energie in elektrische Energie umgewandelt. Diese elektrische Energie kann von einem Verbraucher genutzt werden, der vom elektrischen Stromnetz unabhängig ist, beispielsweise von einem Elektrofahrzeug. Darüber hinaus kann die elektrische Energie des Energiespeichers von einem Verbraucher genutzt werden, der in ein Stromnetz eingebunden ist, um eine Unterbrechung der Stromversorgung durch das Stromnetz zu überbrücken. Der mit wiederaufladbaren Batteriezellen ausgestattete Energiespeicher wird nach einer Entladung wieder aufgeladen, um für den erneuten Einsatz zur Verfügung zu stehen.

Bei Energiespeichern (Akkumulatoren), die aus mehreren seriell miteinander verbundenen wiederaufladbaren Batteriezellen bestehen, ist es unter anderem für die Lebensdauer des Energiespeichers wichtig, dass jede einzelne Zelle weder beim Aufladen des Energiespeichers überladen noch beim Entladen zu tief entladen wird und alle Zellen möglichst den gleichen Ladezustand aufweisen. Dieses gilt insbesondere für Energiespeicher, die aus mehreren seriell miteinander verbundenen Lithium-Ionen-Batterien, Lithium-Polymer-Batterien und/oder Lithium-Eisen-Phosphat-Batterien bestehen.

In der Regel sind derartige Energiespeicher daher jeweils mit einer häufig auch als Batteriemanagement-System bezeichneten Vorrichtung verbunden, die einerseits mittels einer Ladekontrolleinrichtung den Ladezustand der einzelnen Batteriezellen ständig überwacht und andererseits versucht, bei unterschiedlichen Ladezuständen der einzelnen Batteriezellen diese auszugleichen. Dabei kann der auch als Balancing bezeichnete Ausgleich der Ladezustände der Batteriezellen durch passives oder aktives Balancing erfolgen. Außerdem beginnt bei den bekannten Batteriemanagementsystemen der Ladungsausgleich erst, wenn mindestens eine der Batteriezellen voll geladen ist, so dass der gesamte Ladevorgang eines Zellblockes relativ zeitaufwendig ist.

Bei dem passiven Balancing wird bei derjenigen Batteriezelle, die ihre Ladeschlussspannung als erstes erreicht hat, die überschüssige Energie über einen Widerstand in Wärme umgewandelt und geht damit für den Ladevorgang verloren.

Bei dem aktiven Balancing wird hingegen die Energie, die man einer Batteriezelle mit zu hoher Zellspannung entnimmt, nicht in thermische Energie umgewandelt, sondern zum Laden der anderen Zellen des Energiespeichers verwendet. Allerdings beginnt auch bei dem aktiven Balancing der Ladungsausgleich erst wenn mindestens eine der Batteriezellen des Zellblockes ihre Ladeschlussspannung erreicht hat.

Aus der DE 10 2017 009 850 A1 ist ein Verfahren zum Laden und Entladen eines Energiespeichers mit mindestens einem Zellblock aus mehreren in Reihe geschalteten Batteriezellen ohne aktives oder passives Balancing bekannt. Bei diesem bekannten Verfahren erreichen alle Batteriezellen gleichzeitig ihre Ladeschlussspannung oder Entladeschlussspannung. Hierzu wird unter Berücksichtigung eines vorgegebenen C-Faktors, welcher dem Quotient von maximalem Ladestrom $I_{N;max}$ zur Kapazität $C_N$ jeder der Batteriezellen entspricht, aus der Kapazität $C_N$ jeder Batteriezellen ihr charakteristischer maximaler Ladestrom $I_{N;max}$ bestimmt. Während einer vorgegebenen Zeit t, welche kleiner oder gleich dem Kehrwert des C-Faktors ist, werden alle Batteriezellen gleichzeitig mit den ihnen jeweils zugeordneten maximalen Ladeströmen $I_{N;max}$ geladen. Die Differenz zwischen dem zur Verfügung stehenden Ladestrom $I_0$ und dem maximalen Ladestrom $I_{N;max}$ einer Batteriezelle wird über Hilfs-Lade-/Entladeeinrichtungen als Hilfs-Ladestrom von dem Zellblock entnommen oder diesem zugeführt. Das Entladen erfolgt entsprechend.

Aus der DE 10 2015 202939 A1 ist eine Vorrichtung und ein Verfahren zum Ausgleichen des Ladezustands von Batteriezellen bekannt. Die Batteriezellen sind in einem Batteriesystem in Reihe oder parallel geschaltet. Eine Vorrichtung zum Ausgleichen der Batteriezellen umfasst eine Verarbeitungseinrichtung, eine Speichereinrichtung und zu jeder Batteriezelle ein Widerstandselement. Die Verarbeitungseinrichtung ermittelt zu jeder Batteriezelle die Spannung oder den Ladezustand als Messwert. Für jede Batteriezelle wird ein Ausgleichsbedarf aus dem ermittelten Messwert und einem niedrigsten ermittelten Messwert aller Batteriezellen ermittelt. Die Batteriezellen werden unter Berücksichtigung dieses berechneten Ausgleichsbedarfs entladen, so dass das Ausgleichen der Batteriezellen über einen gemeinsamen Zeitraum verteilt erfolgen kann. Hierzu werden die Entladeströme der Batteriezellen entsprechend des berechneten Ausgleichsbedarfs ein- und ausgeschaltet oder die Stärken der Entladeströme eingestellt.

Aus der EP 2 966 751 A1 ist ein sekundäres Batteriesystem und ein Verfahren zur Verteilung des Lade-/Entladestroms bekannt. Das Batteriesystem umfasst eine Vielzahl von Batteriezellen, eine Vielzahl von Leistungswandlern, die jeweils mit der entsprechenden Batteriezellen verbunden sind, und eine Batteriesteuerung, die mit den Leistungswandlern verbunden ist und dazu ausgelegt ist, zu einem festen Zyklus oder einer beliebigen Zeit, einen Ladungs-/Entladungsleistungswert oder einen Stromwert des gesamten Batteriesystems unter jedem der Leistungswandler zu verteilen. Dabei wird durch einen Verteilungsratenbestimmer die elektrische Leistung so zwischen den einzelnen Batterien verteilt, dass ein maximaler Wirkungsgrad des gesamten Systems erreicht wird.

Der Erfindung liegt die Aufgabe zugrunde, ein Verfahren zum Laden und Entladen eines Energiespeichers mit in Reihe geschalteten Batteriezellen zur Verfügung zu stellen, bei dem alle Batteriezellen gleichzeitig geladen werden und gleichzeitig ihre Ladeschlussspannung erreichen und bei dem auf Hilfsladeströme und Hilfsentladeströme verzichtet werden kann.

Diese Aufgabe wird durch ein Verfahren zum Aufladen und/ oder Entladen nach Anspruch 1 gelöst. Das Verfahren zeichnet sich dadurch aus, dass bei einem Energiespeicher mit mindestens einem Zellblock mit einer Anzahl J von in Reihe geschalteten Batteriezellen, welche unterschiedliche Wirkungsgrade $\eta_N$ mit $1 \leq N \leq J$ aufweisen können, die Batteriezelle mit dem schlechtesten Wirkungsgrad $\eta_{min}$ des Zellblocks bestimmt wird. Anschließend wird der Wirkungsgrad aller übrigen Batteriezellen an diesen schlechtesten Wirkungsgrad $\eta_{min}$ angepasst.

Der Wirkungsgrad $\eta_N$ beschreibt die Effizienz der N-ten Batteriezelle des Zellblocks des Energiespeichers als Quotient aus der Nutzenergie $E_N$ und der zugeführten Energie Eo. Es gilt:

$$\eta_N = E_N / E_0$$

$\eta_N$ kann einen Wert zwischen 0 und 1 annehmen.

Auf den Wirkungsgrad einer Batteriezelle wirken sich alle Widerstände der Batteriezelle sowie der Alterungszustand der Batteriezelle, auch genannt State of Health SoH, aus.

Die Batteriezelle mit dem schlechtesten Wirkungsgrad $\eta_{min}$ ist diejenige Batteriezelle, für die bei zugeführter Energie Eo, welche für alle Batteriezellen des Zellblocks des Energiespeichers gleich ist, die Nutzenergie $E_N$ kleiner ist, als bei allen anderen Batteriezellen. Es wird davon ausgegangen, dass die Ursache hierfür Verluste sind, die bei der betreffenden Batteriezelle größer sind als bei den anderen Batteriezellen. Da die Verluste der Batteriezellen unterschiedlich sind, können bei einer allen Batteriezellen zugeführten Energie Eo und einem Ladestrom $I_0$ nicht alle Batteriezellen mit der gleichen Kapazität geladen werden.

Um zu erreichen, dass alle Batteriezellen gleichzeitig ihre Ladeschlussspannung erreichen, wird der Wirkungsgrad aller Batteriezellen an den Wirkungsgrad $\eta_{min}$ angeglichen, so dass alle Batteriezellen mit den gleichen Verlusten behaftet sind wie die Batteriezelle, die von vornherein den schlechtesten Wirkungsgrad aufweist. Die Ladeschlussspannung kann in diesem Zusammenhang, die vom Hersteller im Datenblatt angegebene maximal zulässige Ladespannung oder eine vom Betreiber des Energiespeichers definierte Spannung, die unterhalb dieser Spannungsvorgabe des Herstellers liegen kann, sein. Entsprechendes gilt für die Entladeschlussspannung

Bevor die Wirkungsgrade $\eta_N$ der Batteriezellen an $\eta_{min}$ angeglichen werden, erreicht die Batteriezelle mit dem besten Wirkungsgrad beim Laden als erste ihre Ladeschlussspannung. Dies wird anhand der Zellspannung festgestellt. Diese Batteriezelle hat die höchste Zellspannung im System. Die Zelle mit dem schlechtesten Wirkungsgrad $\eta_{min}$ weist die niedrigste Zellspannung im System auf.

Ziel ist es, dass alle Zellen nahezu gleichzeitig vollgeladen sind, also gleichzeitig ihre maximale Ladeschlussspannung erreichen. Da die Zelle mit dem schlechtesten Wirkungsgrad $\eta_{min}$ aber diejenige ist, welche als letzte diese Spannung erreicht, schlägt die Erfindung vor, die anderen Batteriezellen, die einen besseren Wirkungsgrad haben, an die Batteriezelle mit dem schlechtesten Wirkungsgrad $\eta_{min}$ anzupassen, so dass alle Batteriezellen in der Reihenschaltung den identischen Wirkungsgrad $\eta_N' = \eta_{min}$ aufweisen.

Da es sich hierbei nur um sehr kleine Kapazitäten handelt, die den Unterschied im Wirkungsgrad ausmachen, tritt keine signifikante Verschlechterung des Wirkungsgrades des gesamten Batterieblockes auf.

Bevorzugt werden die Zellspannungen der einzelnen Batteriezellen kontinuierlich gemessen und an eine Kontroll- und Speichereinrichtung übermittelt. Diejenige Batteriezelle, die zuerst voll geladen ist, wird nun beim Entladen und beim anschließenden Aufladen zum Beispiel durch das zeitlich begrenzte Zuschalten eines Widerstandes, gesteuert durch die Kontroll- und Speichereinrichtung, Energie entnommen und dadurch diese Batteriezelle scheinbar im Wirkungsgrad an die Batteriezelle mit dem schlechtesten Wirkungsgrad angepasst. Allen anderen Batteriezellen wird in gleicher Weise, zum Beispiel mittels eines Widerstandes, Energie entzogen. Nur der Batteriezelle mit dem schlechtesten Wirkungsgrad $\eta_{min}$ wird keine Energie entnommen.

Die zu entnehmende Energie oder Leistung $E_{entnahme,N}$ wird für jede Batteriezelle bevorzugt durch eine Kontroll- und Speichereinrichtung berechnet. Die zu entnehmende Energie oder Leistung wird zum Beispiel durch ein zeitlich begrenztes Parallelschalten eines Widerstandes entnommen, wobei die Batteriezelle mit dem besten Wirkungsgrad $\eta_N$ die längste Schaltzeit des Widerstandes aufweist und die Schaltzeit des Widerstandes bei der Batteriezelle mit dem schlechtesten Wirkungsgrad $\eta_{min}$ gleich null ist.

Beim nächsten Ladevorgang sollten nun alle Zellen gleichzeitig die Ladeschlussspannung erreichen. Sollte das noch nicht der Fall sein, wird erneut berechnet, welchen Zellen wie viel Energie entnommen werden muss, so lange bis alle Zellen gleichzeitig ihre Ladeschlussspannung erreichen. Bevorzugt ist das Verfahren selbstlernend und passt sich ständig bei jedem Vollladevorgang an.

Wenn der Zustand erreicht ist, dass alle Zellen nahezu gleichzeitig ihre maximale Ladeschlussspannung erreichen, wird bevorzugt der Zellblock einmal soweit entladen, bis die erste Batteriezelle ihre Entladeschlussspannung erreicht hat. Die dadurch bestimmte Kapazität wird mit der Anzahl der Zellen multipliziert. Das Ergebnis entspricht der maximal für diesen Zellblock entnehmbaren Kapazität.

Jetzt kann der Entladungsgrad DoD (Depth of Discharge) bezogen auf diese Zelle für den gesamten Block eingestellt werden, zum Beispiel 80 %, und nun der Zellblock im Normalbetrieb betrieben. Es ist nun nicht mehr möglich, dass eine Batteriezelle mit mehr als 80 % entladen wird, so dass der Zellblock eine deutlich längere Lebensdauer hat, als ein Zellblock ohne dieses Verfahren der Wirkungsgradangleichung.

Vorteilhafterweise wird bei jedem Ladevorgang überprüft, ob noch alle Batteriezellen zum gleichen Zeitpunkt ihre Ladeschlussspannung erreichen. Sollte eine Batteriezelle nicht auf die vorgegebene Ladeschlussspannung kommen, dann hat sich diese Batteriezelle durch Alterung im Wirkungsgrad verschlechtert. Handelt es sich bei der Batteriezelle um diejenige mit dem schlechtesten Wirkungsgrad, so müssen nun alle anderen Batteriezellen dieser Batteriezelle erneut angepasst werden. Handelt es sich bei der Batteriezelle mit dem verschlechterten Wirkungsgrad um eine Batteriezelle, welche von der Batteriezelle mit dem schlechtesten Wirkungsgrad abweicht, so genügt es, wenn bei dieser Batteriezelle der Wirkungsgrad neu angepasst wird. Dies erfolgt beispielsweise, indem die Schaltzeit eines der Batteriezelle parallel geschalteten Widerstandes reduziert wird. Sollte selbst die Reduzierung der Schaltzeit auf null nicht ausreichend sein, damit die Batteriezelle zusammen mit den anderen Batteriezellen ihre Ladeschlussspannung erreicht, dann hat diese Batteriezelle die bisherige Batteriezelle mit dem schlechtesten Wirkungsgrad abgewechselt. Folglich muss der Wirkungsgrad aller anderen Batteriezellen auch angepasst werden.

Auf diesem Weg wird noch ein zusätzlicher Parameter für den Alterungszustand SoH des gesamten Zellblocks gewonnen.

Im nächsten Schritt kann durch eine erneute Kapazitätsmessung der neue Wert für die maximal entnehmbare Kapazität des Zellblockes bestimmt und daraus wiederum der DoD abgeleitet werden.

Die maximale Lade- oder Entladezeit ist für alle Batteriezellen gleich und deutlich kürzer als bei bekannten Verfahren mit aktivem oder passivem Balancing. Bei Einhaltung dieser Lade- oder Entladezeit kommt es zu keiner Überladung oder Tiefentladung einzelner Batteriezellen.

Da alle Batteriezellen, unabhängig von ihrer jeweiligen Kapazität, nach der maximalen Ladezeit jeweils den gleichen Ladezustand bezogen auf ihre jeweilige Nutzkapazität, besitzen, kann auf ein zusätzliches aktives oder passives Balancing verzichtet werden.

Das Entladen des Energiespeichers erfolgt entsprechend zum Laden. Anstelle eines Ladestroms fließt ein Entladestrom. Der Strom $I_0$ steht beim Laden für den Ladestrom und beim Entladen für den Entladestrom. Zur Unterscheidung kann der Ladestrom als $I_0$ und der Entladestrom als $I_0'$ bezeichnet werden.

Nach einer vorteilhaften Ausgestaltung der Erfindung wird vor dem Angleichen der Wirkungsgrade $\eta_N$ an $\eta_{min}$ die Batteriezelle mit dem schlechtesten Wirkungsgrad $\eta_{min}$ bestimmt, indem zunächst alle Zellen im Zellblock auf ihre Ladeschlussspannung geladen werden, danach der Zellblock bis zu einem vorgegebenen Anteil seiner Nennkapazität entladen wird, anschließend der Zellblock so lange geladen wird, bis mindestens eine Batteriezelle ihre Ladeschlussspannung erreicht hat. Danach wird die Batteriezelle mit dem schlechtesten Wirkungsgrad $\eta_{min}$ als diejenige Batteriezelle festgelegt, die von allen Batteriezellen die kleinste Zellspannung Uzmin aufweist.

Nach einer weiteren vorteilhaften Ausgestaltung der Erfindung wird nach dem Beenden des Ladens des Zellbocks zu allen Batteriezellen die Zellspannung $U_{Z0,N}$ bestimmt. Aus der Differenz $U_{Z0,N} - U_{Zmin}$ wird für jede der Batteriezellen die Energie oder die Leistung $E_{entnahme,N}$ bestimmt, die der jeweiligen Batteriezelle beim Aufladen oder Entladen entnommen wird, so dass ihr angepasster Wirkungsgrad $\eta_N'$ dem Wirkungsgrad $\eta_{min}$ entspricht.

Nach einer weiteren vorteilhaften Ausgestaltung der Erfindung wird vor dem Angleichen der Wirkungsgrade $\eta_N$ an $\eta_{min}$ die Batteriezelle mit dem schlechtesten Wirkungsgrad $\eta_{min}$ bestimmt, indem der Zellblock geladen wird und beim Laden des Zellblocks ein Ladestrom $I_0$ mindestens einmal sprunghaft geändert wird. Bei allen Batteriezellen wird die Zellspannung vor, während und nach der sprunghaften Änderung des Ladestroms $I_0$ innerhalb eines Zeitabschnitts erfasst. Für jede Batteriezelle wird die Differenz $U_{N,stromsprung}$ aus der größten Zellspannung $U_{N,max}$ und der kleinsten Zellspannung $U_{N,min}$ in diesem Zeitabschnitt gebildet: $U_{N,stromsprung} = U_{N,max} - U_{N,min}$. Dies wird als Spannungsantwort auf die sprunghafte Änderung des Ladestroms bezeichnet. Die Batteriezelle mit dem schlechtesten Wirkungsgrad $\eta_{min}$ wird als diejenige Batteriezelle festgelegt, für die die Differenz $U_{N,stromsprung}$ am größten ist mit $U_{stromsprung,max}$.

Nach einer weiteren vorteilhaften Ausgestaltung der Erfindung wird vor dem Angleichen der Wirkungsgrade $\eta_N$ an $\eta_{min}$ die Batteriezelle mit dem schlechtesten Wirkungsgrad $\eta_{min}$ bestimmt, indem der Zellblock entladen wird und beim Entladen des Zellblocks der Entladestrom $I_0'$ mindestens einmal sprunghaft geändert wird. Bei allen Batteriezellen wird die Zellspannung vor, während und nach der sprunghaften Änderung des Entladestroms $I_0'$ innerhalb eines Zeitabschnitts erfasst. Für jede Batteriezelle wird die Differenz $U_{N,stromsprung}$ aus der größten Zellspannung $U_{N,max}$ und der kleinsten Zellspannung $U_{N,min}$ in diesem Zeitabschnitt gebildet: $U_{N,stromsprung} = U_{N,max} - U_{N,min}$. Dies wird als Spannungsantwort auf die sprunghafte Änderung des Entladestroms bezeichnet. Die Batteriezelle mit dem schlechtesten Wirkungsgrad $\eta_{min}$ wird als diejenige Batteriezelle festgelegt, für die die Differenz $U_{N,stromsprung}$ am größten ist mit $U_{stromsprung,max}$.

Nach einer weiteren vorteilhaften Ausgestaltung der Erfindung wird aus der Differenz $U_{stromsprung,max}$ und $U_{N,stromsprung}$ für jede der Batteriezellen die Energie oder die Leistung $E_{entnahme,N}$ bestimmt, die der jeweiligen Batteriezelle beim Aufladen oder Entladen entnommen wird, so dass ihr Wirkungsgrad dem Wirkungsgrad $\eta_{min}$ entspricht.

Nach einer weiteren vorteilhaften Ausgestaltung der Erfindung wird für jede Batteriezelle die Energie oder die Leistung $E_{entnahme,N}$, die der jeweiligen Batteriezelle beim Aufladen oder Entladen entnommen wird, so dass ihr Wirkungsgrad dem Wirkungsgrad $\eta_{min}$ entspricht, abgespeichert.

Nach einer weiteren vorteilhaften Ausgestaltung der Erfindung werden die Zellspannungen $U_{Z0,N}$ oder die aus den Zellspannungen abgeleiteten Wirkungsgrade $\eta_N$ abgespeichert.

Nach einer weiteren vorteilhaften Ausgestaltung der Erfindung wird in vorgegebenen zeitlichen Abständen die Kapazität der Batteriezelle mit dem schlechtesten Wirkungsgrad $\eta_{min}$ bestimmt.

Nach einer weiteren vorteilhaften Ausgestaltung der Erfindung werden die Zellspannungen aller Batteriezellen regelmäßig gemessen.

Nach einer weiteren vorteilhaften Ausgestaltung der Erfindung wird in gewissen Abständen unmittelbar nach dem Aufladen des Zellblocks zu allen Batteriezellen die Zellspannung $U_{Z,N}$ bestimmt und mit der Ladeschlussspannung $U_{L,N}$ verglichen. Bei einer Abweichung der Zellspannung $U_{Z,N}$ der Batteriezelle mit dem schlechtesten Wirkungsgrad $\eta_N = \eta_{min}$ von der Ladeschlussspannung $U_{L,N}$ um mehr als einen vorgegebenen Grenzwert, wird die Energie oder die Leistung angepasst, die allen anderen Batteriezellen zur Anpassung ihres Wirkungsgrads an den Wirkungsgrad $\eta_{min}$ entnommen wird. Tritt eine derartige Abweichung der Zellspannung $U_{Z,N}$ von der Ladeschlussspannung $U_{L,N}$ um mehr als einen vorgegebenen Grenzwert bei einer anderen Batteriezelle auf, so wird nur bei dieser Batteriezelle die Energie oder die Leistung angepasst, die dieser Batteriezelle zur Anpassung ihres Wirkungsgrades an den Wirkungsgrad $\eta_{min}$ entnommen wird. Die setzt voraus, dass der Wirkungsgrad $\eta_N$ der betreffenden Batteriezelle trotz Verschlechterung immer noch größer als $\eta_{min}$ ist. Wenn es beispielsweise notwendig ist, die Energie oder die Leistung, die dieser Batteriezelle entnommen wird, auf null zu reduzieren und diese Batteriezelle beim nächsten Aufladen des Zellblocks immer noch eine Abweichung zwischen der Zellspannung $U_{Z,N}$ und der Ladeschlussspannung $U_{L,N}$ aufweist, die den vorgegebenen Grenzwert überschreitet, dann wird diese Batteriezelle zur Batteriezelle mit dem schlechtesten Wirkungsgrad $\eta_N = \eta_{min}'$. In der Folge wird die Energie oder die Leistung angepasst, die allen anderen Batteriezellen zur Anpassung ihres Wirkungsgrads an den Wirkungsgrad $\eta_{min}'$ entnommen wird. Dieses Vorgehen dient im laufenden Betrieb dazu, eine Verschlechterung des Wirkungsgrades einzelner Batteriezellen auszugleichen.

Nach einer weiteren vorteilhaften Ausgestaltung der Erfindung wird beim Laden des Zellblocks der Ladestrom $I_0$ mindestens einmal sprunghaft geändert und die daraus resultierende Spannungsantwort der Batteriezellen untereinander verglichen. Sind die Wirkungsgrade $\eta_N$ der Batteriezellen derart angepasst, dass $\eta_N' = \eta_{min}$, so sollten die Spannungsantworten aller Batteriezellen im Wesentlichen qualitativ gleich sein und innerhalb eines vorgegebenen Bereichs liegen. Weicht die Spannungsantwort mindestens einer der Batteriezellen von den anderen Batteriezellen um mehr eine vorgegebene Grenze ab, so wird der Wirkungsgrad dieser Batteriezelle oder der anderen Batteriezellen erneut angepasst. Dies erfolgt beispielsweise entsprechend wie oben beschrieben. Alternativ dazu kann beim Entladen des Zellblocks der Entladestrom mindestens einmal sprunghaft geändert werden und die daraus resultierende Spannungsantwort der Batteriezellen überprüft werden.

Nach einer weiteren vorteilhaften Ausgestaltung der Erfindung erfolgt die Angleichung des Wirkungsgrades mit schaltbaren Widerständen $R_N$, wobei jede Batteriezelle mit einem schaltbaren Widerstand ausgestattet ist.

Nach einer weiteren vorteilhaften Ausgestaltung der Erfindung wird der Widerstand $R_N$ der Batteriezellen derart eingestellt, dass für jede Kombination aus Batteriezelle und ihrem zugehörigen schaltbarem Widerstand der Wirkungsgrad $\eta_N' = \eta_{min}$ ist.

Nach einer weiteren vorteilhaften Ausgestaltung der Erfindung wird ein schaltbarer Widerstand nur über einen Zeitabschnitt des Ladevorgangs oder des Entladevorgangs einer Batteriezellen parallel geschaltet. Der betreffende Widerstand ist nicht während des gesamten Ladevorgangs oder Entladevorgangs parallel zu der zugehörigen Batteriezelle geschaltet. Die Parallelschaltung wird für einen Teil des Ladevorgangs oder Entladevorgangs unterbrochen. Erfolgt das Angleichen der Wirkungsgrade der Batteriezellen durch Zuschalten eines parallel geschalteten Widerstandes, so kann aus dem Verhältnis der Spannungssprünge der Batteriezellen zueinander die Schaltzeit der Widerstände abgeleitet werden. Insbesondere kann die Schaltzeit der Widerstände gleich dem umgekehrten Verhältnis der Spannungssprünge der Batteriezellen gesetzt werden. Der Batteriezelle mit dem schlechtesten Wirkungsgrad wird keine Energie mittels eines Widerstandes entnommen, der Batteriezelle mit dem besten Wirkungsgrad wird am Längsten mittels eines Parallelwiderstandes Energie entnommen.

Nach einer weiteren vorteilhaften Ausgestaltung der Erfindung wird die Dauer des Zeitabschnitts für jede Batteriezelle so eingestellt, dass für jede Kombination aus Batteriezelle und ihrem zugehörigen schaltbarem Widerstand der Wirkungsgrad $\eta_N' = \eta_{min}$ ist.

Nach einer weiteren vorteilhaften Ausgestaltung der Erfindung wird der Wert des Widerstandes für jede Batteriezelle so eingestellt, dass für jede Kombination aus Batteriezelle und ihrem zugehörigen schaltbarem Widerstand der Wirkungsgrad $\eta_N' = \eta_{min}$ ist.

Nach einer weiteren vorteilhaften Ausgestaltung der Erfindung erfolgt die Angleichung des Wirkungsgrades mit DC-DC-Wandlern, wobei jede Batteriezelle mit einem DC-DC-Wandler ausgestattet ist, und der DC-DC-Wandler derart eingestellt wird, dass für jede Kombination aus Batteriezelle und DC-DC-Wandler der Wirkungsgrad $\eta_N' = \eta_{min}$ ist.

Nach einer weiteren vorteilhaften Ausgestaltung der Erfindung wird beim Laden des Zellblocks bei Erreichen der Ladeschlussspannung des Zellblocks zu jeder Batteriezelle die zugehörige Spannung gemessen. Die gemessenen Spannungen werden miteinander verglichen.

Nach einer weiteren vorteilhaften Ausgestaltung der Erfindung wird die Angleichung des Wirkungsgrads $\eta_N$ einer Batteriezelle an $\eta_{min}$ angepasst, wenn die beim Erreichen der Ladeschlussspannung des Zellblocks gemessene Zellspannung dieser Batteriezelle um mehr als einen vorgegebenen Grenzwert von der Zellspannung der übrigen Batteriezellen verschieden ist.

Weitere Vorteile und vorteilhafte Ausgestaltungen der Erfindung sind der nachfolgenden Beschreibung, der Zeichnung und den Ansprüchen entnehmbar.

Zeichnung

In der Zeichnung ist ein Ausführungsbeispiel des Erfindungsgegenstandes dargestellt. Es zeigt:

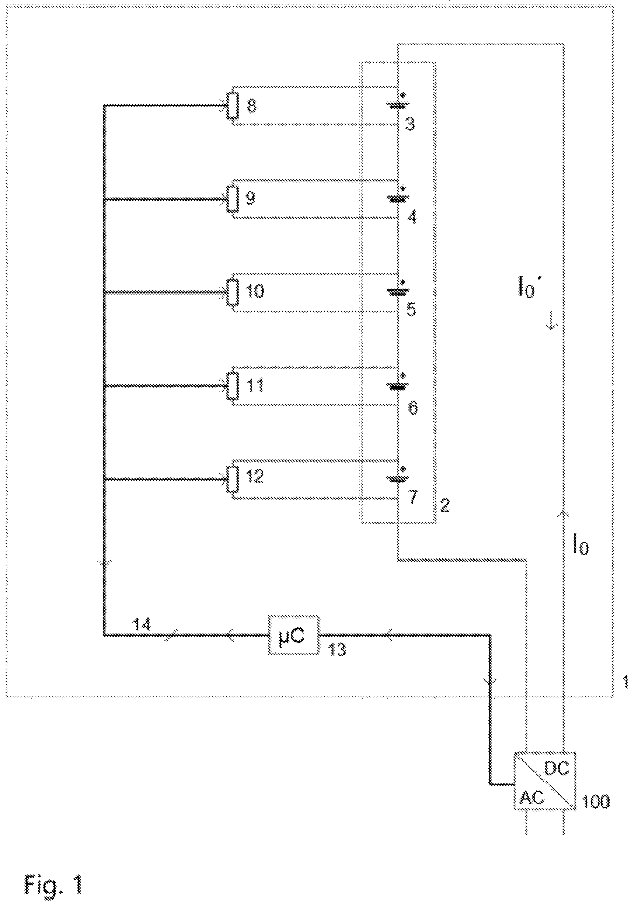

Figur 1 Schaltplan eines Energiespeichers.

Beschreibung des Ausführungsbeispiels

In Figur 1 ist ein Schaltplan eines Energiespeichers 1 dargestellt, der beispielsweise zur Energieversorgung eines Versorgungsnetzes eines Gebäudes dient und durch eine Anlage zur Erzeugung regenerativer Energie (Photovoltaikanlage, Windstromanlage, Biogasanlage etc.) beispielsweise über einen bidirektionalen AC/DC-Wandler 100 auf- und entladbar ist. Der Energiespeicher 1 umfasst bei dem dargestellten Ausführungsbeispiel einen Zellblock 2 mit mehreren seriell miteinander verbundenen, wiederaufladbaren Batteriezellen 3, 4, 5, 6, 7. Jede der Batteriezellen 3 bis 7 ist mit einem schaltbaren Widerstand 8, 9, 10, 11, 12 ausgestattet. Dabei ist der schaltbare Widerstand 8 der Batteriezelle 3 parallelgeschaltet. Entsprechendes gilt für die Widerstände 9, 10, 11, 12 und die Batteriezellen 4, 5, 6, 7. Schaltbar bedeutet, dass die Widerstände für eine zeitlich begrenzte Dauer während des Ladens oder Entladens des Zellblocks zu den Batteriezellen parallel geschaltet sind.

Zur Kontrolle des Lade- bzw. Entladezustandes der einzelnen Batteriezellen 3 bis 7 ist eine Kontroll- und Speichereinrichtung 13 vorgesehen, die über entsprechende Datenleitungen 14 sowohl mit den schaltbaren Widerständen 8 bis 12 als auch mit dem bidirektionalen AC/DC-Wandler 100 verbunden ist.

Nachfolgend wird die Bestimmung der Batteriezelle mit dem schlechtesten Wirkungsgrad und die Anpassung der Wirkungsgrade der übrigen Batteriezellen an diesen schlechtesten Wirkungsgrad beschrieben: Alle Batteriezellen 3 bis 7 im Zellblock 2 werden zunächst bis zum Erreichen ihrer Ladeschlussspannung geladen. Danach wird der Zellblock 2 entladen, bis er 50% seiner Nennkapazität erreicht. Anschließend wird der Zellblock erneut so lange geladen, bis eine der Batteriezellen als erste ihre Ladeschlussspannung erreicht. Im vorliegenden Ausführungsbeispiel sei dies Batteriezelle 5. Zu dem Zeitpunkt, zu dem die Batteriezelle 5 ihre Ladeschlussspannung erreicht, werden die Spannungsdifferenzen zwischen der Zellspannung der Batteriezelle 5 und den Zellspannungen der übrigen Batteriezellen 3, 4, 6, 7 bestimmt. Die Spannungsdifferenzen lassen Rückschlüsse auf die Wirkungsgradunterschiede zu. Diejenige Batteriezelle 3, 4, 6, 7, die die größte Spannungsdifferenz zu Batteriezelle 5 aufweist, wird als die Batteriezelle mit dem schlechtesten Wirkungsgrad $\eta_{min}$ festgelegt. Im vorliegenden Ausführungsbeispiel ist dies Batteriezelle 6.

Anschließend werden die Wirkungsgrade $\eta_N$ mit $N \in \{3, 4, 5, 7\}$ der Batteriezellen 3, 4, 5, 7 an den Wirkungsgrad $\eta_{min}$ angepasst, indem die Schaltdauer der schaltbaren Widerstände 8 bis 12 für den Ladevorgang und den Entladevorgang bestimmt werden. Bei der Batteriezelle 6 wird der zugehörige Widerstand 11 während des Ladevorgangs und während des Entladevorgangs nicht parallelgeschaltet, da der Wirkungsgrad dieser Batteriezelle bereits der schlechteste Wirkungsgrad ist: $\eta_6 = \eta_{min}$. Bei der Batteriezelle mit dem besten Wirkungsgrad, im vorliegenden Fall Batteriezelle 5, wird der zugehörige schaltbare Widerstand 10 am längsten eingeschaltet.

Durch das Schalten der schaltbaren Widerstände 8, 9, 10, und 12 wird erreicht, dass die Verluste beim Laden und Entladen aller Batteriezellen 3 bis 7 gleich sind und daher der Wirkungsgrad aller Batteriezellen 3 bis 7 dem Wirkungsgrad $\eta_{min}$ entspricht:

$$\eta_3 = \eta_4 = \eta_5 = \eta_6 = \eta_7 = \eta_{min}$$

Dadurch erreichen alle Batteriezellen 3 bis 7 beim Laden des Zellblocks 2 gleichzeitig ihre Ladeschlussspannung.

Sämtliche Merkmale der Erfindung können sowohl einzeln auch in beliebiger Kombination miteinander erfindungswesentlich sein.

Bezugszahlen

1 Energiespeicher
2 Zellblock

3      Batteriezelle
4      Batteriezelle
5      Batteriezelle
6      Batteriezelle
7      Batteriezelle
8      Schaltbarer Widerstand
9      Schaltbarer Widerstand
10     Schaltbarer Widerstand
11     Schaltbarer Widerstand
12     Schaltbarer Widerstand
13     Kontroll- und Speichereinrichtung
14     Datenleitung
100    bidirektionaler AC/DC-Wandler

**Patentansprüche**

1. Verfahren zum Aufladen und/ oder Entladen eines Energiespeichers (1) mit einem Strom $I_0$, wobei der Energiespeicher (1) mindestens einen Zellblock (2) mit einer Anzahl J von in Reihe geschalteten Batteriezellen (3, 4, 5, 6, 7) aufweist, von denen mindestens einige der Batteriezellen (3, 4, 5, 6, 7) unterschiedliche Wirkungsgrade $\eta_N$ mit $1 \leq N \leq J$ aufweisen können, mit folgenden Verfahrensschritten:

    - Bestimmen der Batteriezelle (3, 4, 5, 6, 7) mit dem schlechtesten Wirkungsgrad $\eta_{min}$,
    - Angleichen des Wirkungsgrades $\eta_N$ aller übrigen Batteriezellen (3, 4, 5, 6, 7) an diesen schlechtesten Wirkungsgrad $\eta_{min}$, so dass für den angeglichenen Wirkungsgrad $\eta_N'$ der Batteriezellen gilt: $\eta_N' = \eta_{min}$.

2. Verfahren nach Anspruch 1, **dadurch gekennzeichnet, dass** vor dem Angleichen der Wirkungsgrade $\eta_N$ an $\eta_{min}$ die Batteriezelle (3, 4, 5, 6, 7) mit dem schlechtesten Wirkungsgrad $\eta_{min}$ bestimmt wird, indem zunächst alle Batteriezellen (3, 4, 5, 6, 7) im Zellblock (2) auf ihre Ladeschlussspannung geladen werden, danach der Zellblock (2) bis zu einem vorgegebenen Anteil seiner Nennkapazität entladen wird, anschließend der Zellblock (2) so lange geladen wird, bis mindestens eine Batteriezelle (3, 4, 5, 6, 7) ihre Ladeschlussspannung erreicht hat, und danach die Batteriezelle (3, 4, 5, 6, 7) mit dem schlechtesten Wirkungsgrad $\eta_{min}$, als diejenige Batteriezelle festgelegt wird, die von allen Batteriezellen (3, 4, 5, 6, 7) die kleinste Zellspannung $U_{Zmin}$ aufweist.

3. Verfahren nach Anspruch 2, **dadurch gekennzeichnet, dass** nach dem Beenden des Ladens des Zellbocks zu allen Batteriezellen (3, 4, 5, 6, 7) die Zellspannung $U_{Z0,N}$ bestimmt wird, und dass aus der Differenz $U_{Z0,N} - U_{Zmin}$ für jede der Batteriezellen (3, 4, 5, 6, 7) die Energie oder die Leistung $E_{entnahme,N}$ bestimmt wird, die der jeweiligen Batteriezelle (3, 4, 5, 6, 7) beim Aufladen oder Entladen entnommen wird, so dass ihr derart angeglichener Wirkungsgrad $\eta_N'$ dem Wirkungsgrad $\eta_{min}$ entspricht.

4. Verfahren nach Anspruch 3, **dadurch gekennzeichnet, dass** die Zellspannungen $U_{Z0,N}$ oder die aus den Zellspannungen abgeleiteten Wirkungsgrade $\eta_N$ abgespeichert werden.

5. Verfahren nach Anspruch 1, **dadurch gekennzeichnet, dass** vor dem Angleichen der Wirkungsgrade $\eta_N$ an $\eta_{min}$ die Batteriezelle mit dem schlechtesten Wirkungsgrad $\eta_{min}$ bestimmt wird, indem der Zellblock (2) geladen wird und beim Laden des Zellblocks (2) ein Ladestrom $I_0$ mindestens einmal sprunghaft geändert wird, dass bei allen Batteriezellen (3, 4, 5, 6, 7) die Zellspannung vor, während und nach der sprunghaften Änderung des Ladestroms $I_0$ innerhalb eines Zeitabschnitts erfasst wird, dass für jede Batteriezelle (3, 4, 5, 6, 7) die Differenz $U_{N,stromsprung}$ aus der größten Zellspannung $U_{N,max}$ und kleinsten Zellspannung $U_{N,min}$ in diesem Zeitabschnitt gebildet wird mit $U_{N,stromsprung} = U_{N,max} - U_{N,min}$, und dass die Batteriezelle (3, 4, 5, 6, 7) mit dem schlechtesten Wirkungsgrad $\eta_{min}$ als diejenige Batteriezelle (3, 4, 5, 6, 7) festgelegt wird, für die die Differenz $U_{N,stromsprung}$ am größten ist mit $U_{stromsprung,max}$.

6. Verfahren nach Anspruch 1, **dadurch gekennzeichnet, dass** vor dem Angleichen der Wirkungsgrade $\eta_N$ an $\eta_{min}$ die Batteriezelle mit dem schlechtesten Wirkungsgrad $\eta_{min}$ bestimmt wird, indem der Zellblock (2) entladen wird und beim Entladen des Zellblocks ein Entladestrom $I_0'$ mindestens einmal sprunghaft geändert wird, dass bei allen Batteriezellen (3, 4, 5, 6, 7) die Zellspannung vor, während und nach der sprunghaften Änderung des Entladestroms $I_0'$ innerhalb eines Zeitabschnitts erfasst wird, dass für jede Batteriezelle (3, 4, 5, 6, 7) die Differenz $U_{N,stromsprung}$ aus der größten Zellspannung $U_{N,max}$ und kleinsten Zellspannung $U_{N,min}$ in diesem Zeitabschnitt gebildet wird mit $U_{N,stromsprung} = U_{N,max} - U_{N,min}$, und dass die Batteriezelle (3, 4, 5, 6, 7) mit dem schlechtesten Wirkungsgrad $\eta_{min}$ als diejenige Batteriezelle (3, 4, 5, 6, 7) festgelegt wird, für die die Differenz $U_{N,stromsprung}$ am größten ist mit $U_{stromsprung,max}$.

7. Verfahren nach Anspruch 5 oder 6, **dadurch gekennzeichnet, dass** aus der Differenz $U_{stromsprung,max}$ und $U_{N,stromsprung}$ für jede der Batteriezellen (3, 4, 5, 6, 7) die Energie oder die Leistung $E_{entnahme,N}$ bestimmt wird, die der jeweiligen Batteriezelle beim Aufladen oder Entladen entnommen wird, so dass ihr derart angeglichener Wirkungsgrad $\eta_N'$ dem Wirkungsgrad

$\eta_{min}$ entspricht.

8. Verfahren nach Anspruch 3 oder 7, **dadurch gekennzeichnet, dass** für jede Batteriezelle (3, 4, 5, 6, 7) die Energie oder die Leistung $E_{entnahme,N}$, die der jeweiligen Batteriezelle (3, 4, 5, 6, 7) beim Aufladen oder Entladen entnommen wird, so dass ihr Wirkungsgrad angeglichener Wirkungsgrad $\eta_N'$ dem Wirkungsgrad $\eta_{min}$ entspricht, abgespeichert wird.

9. Verfahren nach einem der vorhergehenden Ansprüche, **dadurch gekennzeichnet, dass** die Kapazität der Batteriezelle (3, 4, 5, 6, 7) mit dem schlechtesten Wirkungsgrad $\eta_{min}$ bestimmt wird.

10. Verfahren nach einem der vorhergehenden Ansprüche, **dadurch gekennzeichnet, dass** die Zellspannungen der Batteriezellen (3, 4, 5, 6, 7) regelmäßig nach dem Laden des Zellblocks gemessen werden.

11. Verfahren nach einem der vorhergehenden Ansprüchen, **dadurch gekennzeichnet, dass** in gewissen Abständen unmittelbar nach dem Aufladen des Zellblocks zu allen Batteriezellen (3, 4, 5, 6, 7) die Zellspannung $U_{Z,N}$ bestimmt und mit der Ladeschlussspannung $U_{L,N}$ verglichen wird, und dass bei einer Abweichung der Zellspannung $U_{Z,N}$ einer Batteriezelle (3, 4, 5, 6, 7) von ihrer Ladeschlussspannung $U_{L,N}$ um mehr als einen vorgegebenen Grenzwert die Energie oder die Leistung $E_{entnahme,N}$ angepasst wird, die der betreffenden Batteriezelle (3, 4, 5, 6, 7) oder allen anderen Batteriezellen zur Anpassung ihres Wirkungsgrads an den Wirkungsgrad $\eta_{min}$ entnommen wird.

12. Verfahren nach Anspruch 11, **dadurch gekennzeichnet, dass** bei einer Abweichung der Zellspannung $U_{Z,N}$ der Batteriezelle (3, 4, 5, 6, 7) mit dem schlechtesten Wirkungsgrad $\eta_N = \eta_{min}$ von der Ladeschlussspannung $U_{L,N}$ um mehr als einen vorgegebenen Grenzwert die Energie oder die Leistung $E_{entnahme,N}$ angepasst wird, die allen anderen Batteriezellen (3, 4, 5, 6, 7) zur Anpassung ihres Wirkungsgrads an den Wirkungsgrad $\eta_{min}$ entnommen wird.

13. Verfahren nach Anspruch 11 oder 12, **dadurch gekennzeichnet, dass** bei einer Abweichung der Zellspannung $U_{Z,N}$ einer Batteriezelle (3, 4, 5, 6, 7), für die bislang $\eta_N > \eta_{min}$ galt, von der Ladeschlussspannung $U_{L,N}$ um mehr als einen vorgegebenen Grenzwert, die dieser Batteriezelle (3, 4, 5, 6, 7) zur Anpassung des Wirkungsgrades entnommene Energie oder Leistung $E_{entnahme,N}$ reduziert wird auf $E_{entnahme,N}'$, derart dass zukünftig für den Spannungsunterschied $\Delta U_N = U_{L,N} - U_{Z,N}$ gilt $\Delta U_N = 0$.

14. Verfahren nach Anspruch 13, **dadurch gekennzeichnet, dass** bei einer Batteriezelle (3, 4, 5, 6, 7), für die bislang $\eta_N > \eta_{min}$ galt und bei der festgestellt wird, dass selbst bei einer Reduzierung auf $E_{entnahme,N}' = 0$ der Spannungsunterschied $\Delta U_N = U_{L,N} - U_{Z,N} > 0$ ist, diese Batteriezelle (3, 4, 5, 6, 7) nunmehr als Batteriezelle mit dem schlechtesten Wirkungsgrad $\eta_{min}'$ definiert wird, und dass die Wirkungsgrade aller anderen Batteriezellen (3, 4, 5, 6, 7) an diesen neuen schlechtesten Wirkungsgrad $\eta_{min}'$ angepasst werden.

15. Verfahren nach einem der vorhergehenden Ansprüche, **dadurch gekennzeichnet, dass** beim Aufladen oder Entladen des Zellblocks (2) der Ladestrom oder Entladestrom mindestens einmal sprunghaft geändert wird, und dass eine daraus resultierende sprunghafte Änderung der Zellspannung als Spannungsantwort für alle Batteriezellen (3, 4, 5, 6, 7) erfasst und für die Batteriezellen (3, 4, 5, 6, 7) untereinander verglichen wird, und dass die Energie oder die Leistung $E_{entnahme,N}$ angepasst wird, die einer Batteriezelle (3, 4, 5, 6, 7) oder mehreren Batteriezellen (3, 4, 5, 6, 7) zur Anpassung ihres Wirkungsgrads an den Wirkungsgrad $\eta_{min}$ entnommen wird, wenn für mindestens eine Batteriezelle (3, 4, 5, 6, 7) die sprunghafte Änderung der Zellspannung quantitativ um mehr als ein vorgegebener Grenzwert von den Änderungen der Zellspannungen der übrigen Batteriezellen (3, 4, 5, 6, 7) abweicht.

16. Verfahren nach Anspruch 15, **dadurch gekennzeichnet, dass** bei einer Abweichung der sprunghaften Änderung der Zellspannung der Batteriezelle (3, 4, 5, 6, 7) mit dem schlechtesten Wirkungsgrad $\eta_N = \eta_{min}$ von den Änderungen der Zellspannungen der übrigen Batteriezellen um mehr als ein vorgegebener Grenzwert die Energie oder die Leistung $E_{entnahme,N}$ angepasst wird, die allen übrigen Batteriezellen (3, 4, 5, 6, 7) zur Anpassung ihres Wirkungsgrads an den Wirkungsgrad $\eta_{min}$ entnommen wird.

17. Verfahren nach Anspruch 15 oder 16, **dadurch gekennzeichnet, dass** bei einer Abweichung der sprunghaften Änderung der Zellspannung einer Batteriezelle (3, 4, 5, 6, 7), für die bislang $\eta_N > \eta_{min}$ galt, von der sprunghaften Änderung der übrigen Batteriezellen (3, 4, 5, 6, 7) um mehr als einen vorgegebenen Grenzwert, die dieser Batteriezelle (3, 4, 5, 6, 7) zur Anpassung des Wirkungsgrades entnommene Energie oder Leistung $E_{entnahme,N}$ reduziert wird auf $E_{entnahme,N}'$, derart dass zukünftig bei einer sprunghaften Änderung des Lade- oder Entladestroms die sprunghafte Änderung der Zellspannung dieser Batteriezelle (3, 4, 5, 6, 7) im Wesentlichen den sprunghaften Änderungen der Zellspannungen der übrigen Batteriezellen (3, 4, 5, 6, 7) entspricht.

18. Verfahren nach Anspruch 17, **dadurch gekennzeichnet, dass** bei einer Batteriezelle, für die bislang $n_N > \eta_{min}$ galt und bei der festgestellt wird, dass selbst bei einer Reduzierung auf $E_{entnahme,N}' = 0$ die sprunghafte Änderung der Zellspannung dieser Batteriezelle (3, 4, 5, 6, 7) als Antwort auf eine sprunghafte Änderung des Lade- oder Entladestroms um mehr als ein vorgegebener Grenzwert größer als die sprunghaften Änderungen der Zellspannungen der übrigen Batteriezellen (3, 4, 5, 6, 7) ist, diese Batteriezelle (3, 4, 5, 6, 7) nunmehr als Batteriezelle mit dem schlechtesten Wirkungsgrad $\eta_{min}'$ definiert wird, und dass die Wirkungsgrade aller anderen Batteriezellen (3, 4, 5, 6, 7) an diesen neuen schlechtesten Wirkungsgrad $\eta_{min}'$ angepasst werden.

19. Verfahren nach einem der vorhergehenden Ansprüche, **dadurch gekennzeichnet, dass** die Angleichung des Wirkungsgrades mit schaltbaren Widerständen $R_N$ erfolgt, wobei jede Batteriezelle mit einem schaltbaren Widerstand ausgestattet ist.

20. Verfahren nach Anspruch 19, **dadurch gekennzeichnet, dass** der Widerstand $R_N$ (8, 9, 10, 11, 12) der Batteriezellen (3, 4, 5, 6, 7) derart eingestellt wird, dass für jede Kombination aus Batteriezelle (3, 4, 5, 6, 7) und ihrem zugehörigen schaltbarem Widerstand (8, 9, 10, 11, 12) der Wirkungsgrad $\eta_N' = \eta_{min}$ ist.

21. Verfahren nach Anspruch 19 oder 20, **dadurch gekennzeichnet, dass** die schaltbaren Widerstände (8, 9, 10, 11, 12) nur über einen Zeitabschnitt des Ladevorgangs oder des Entladevorgangs den Batteriezellen (3, 4, 5, 6, 7) parallel geschaltet sind.

22. Verfahren nach Anspruch 21, **dadurch gekennzeichnet, dass** die Dauer des Zeitabschnitts für jede Batteriezelle (3, 4, 5, 6, 7) so eingestellt wird, dass für jede Kombination aus Batteriezelle (3, 4, 5, 6, 7) und ihrem zugehörigen schaltbarem Widerstand (8, 9, 10, 11, 12) der Wirkungsgrad $n_N' = \eta_{min}$ ist.

23. Verfahren nach einem der vorhergehenden Ansprüche, **dadurch gekennzeichnet, dass** die Angleichung des Wirkungsgrades mit DC-DC-Wandlern erfolgt, wobei jede Batteriezelle (3, 4, 5, 6, 7) mit einem DC-DC-Wandler ausgestattet ist, und der DC-DC-Wandler derart eingestellt wird, dass für jede Kombination aus Batteriezelle (3, 4, 5, 6, 7) und DC-DC-Wandler der Wirkungsgrad $\eta_N' = \eta_{min}$ ist.

**Claims**

1. Method for charging and/or discharging an energy store (1) with a current $I_0$, wherein the energy store (1) has at least one cell block (2) having a number J of series-connected battery cells (3, 4, 5, 6, 7), at least some of the battery cells (3, 4, 5, 6, 7) of which may have different efficiencies $\eta_N$, where $1 \leq N \leq J$, with the following method steps:

   - determining the battery cell (3, 4, 5, 6, 7) having the lowest efficiency $\eta_{min}$,
   - adjusting the efficiency $\eta_N$ of all the other battery cells (3, 4, 5, 6, 7) to this lowest efficiency $\eta_{min}$ such that for the adjusted efficiency $\eta_N'$ of the battery cells applies: $\eta_N' = \eta_{min}$.

2. Method according to claim 1, **characterised in that** prior to the adjustment of the efficiencies $\eta_N$ to $\eta_{min}$ the battery cell (3, 4, 5, 6, 7) with the lowest efficiency $\eta_{min}$ is determined **in that** all battery cells (3, 4, 5, 6, 7) in the cell block (2) are first charged to their end-of-charge voltage, the cell block (2) is then discharged to a specific proportion of its nominal capacitance, the cell block (2) is subsequently charged until at least one battery cell (3, 4, 5, 6, 7) has reached its end-of-charge voltage and the battery cell (3, 4, 5, 6, 7) with the lowest efficiency $\eta_{min}$ is then defined as the battery cell which has the smallest cell voltage $U_{zmin}$ of all battery cells (3, 4, 5, 6, 7).

3. Method according to claim 2, **characterised in that** after the cell block has finished being charged the cell voltage $U_{Z0,N}$ for all battery cells (3, 4, 5, 6, 7) is determined and that for each of the battery cells (3, 4, 5, 6, 7) the energy or the power $E_{taken,N}$ that is taken from the respective battery cell (3, 4, 5, 6, 7) during charging or discharging is determined from the difference $U_{Z0,N} - U_{Zmin}$, so that its thus adjusted efficiency $\eta_N'$ corresponds to the efficiency $\eta_{min}$.

4. Method according to claim 3, **characterised in that** the cell voltages $U_{Z0,N}$ or the efficiencies $\eta_N$ derived from the cell voltages are stored.

5. Method according to claim 1, **characterised in that** prior to the adjustment of the efficiencies $\eta_N$ to $\eta_{min}$ the battery cell with the lowest efficiency $\eta_{min}$ is determined **in that** the cell block (2) is charged and while the cell block (2) is being charged a charging current $I_0$ is stepped at least once, that the cell voltage of all battery cells (3, 4, 5, 6, 7) is recorded over a period of time before, during and after the step change in the charging current $I_0$, that for every battery cell (3, 4, 5, 6, 7) the difference $U_{N,current\ step}$ between the highest cell voltage $U_{N,max}$ and the lowest cell voltage $U_{N,min}$ over this period of time is determined with $U_{N,current\ step} = U_{N,max} - U_{N,min}$, and that the battery cell (3, 4, 5, 6, 7) with the lowest efficiency $\eta_{min}$ is defined as the battery cell (3, 4, 5, 6, 7) for which the difference $U_{N,current\ step}$ is greatest with $U_{current\ step,max}$.

6. Method according to claim 1, **characterised in that** prior to the adjustment of the efficiencies $\eta_N$ to $\eta_{min}$ the battery cell with the lowest efficiency $\eta_{min}$ is determined **in that** the cell block (2) is discharged and while the cell block is being discharged a discharging current $I_0'$ is stepped at least once, that the cell voltage of all battery cells (3, 4, 5, 6, 7) is recorded over a period of time before, during and after the step change in the discharging current $I_0'$, that for every battery cell (3, 4, 5, 6, 7) the difference $U_{N,current\ step}$ between the highest cell voltage $U_{N,max}$ and the lowest cell voltage $U_{N,min}$ over this period of time is determined with $U_{N,current\ step} = U_{N,max} - U_{N,min}$, and that the battery cell (3, 4, 5, 6, 7) with the lowest efficiency $\eta_{min}$ is defined as the battery cell (3, 4, 5, 6, 7) for which the difference $U_{N,current\ step}$ is greatest with $U_{current\ step,max}$.

7. Method according to claim 5 or 6, **characterised in that** for each of the battery cells (3, 4, 5, 6, 7) the energy or power $E_{taken,N}$ that is taken from the respective battery cell during charging or discharging is determined from the difference $U_{current\ step,max}$ and $U_{N,current\ step}$, so that its thus adjusted efficiency $\eta_N'$ corresponds to the efficiency $\eta_{min}$.

8. Method according to claim 3 or 7, **characterised in that** for each battery cell (3, 4, 5, 6, 7) the energy or the power $E_{taken,N}$, that is taken from the respective battery cell (3, 4, 5, 6, 7) during charging or discharging, so that its adjusted efficiency $\eta_N'$ corresponds to the efficiency $\eta_{min}$, is stored.

9. Method according to one of the previous claims, **characterised in that** the capacitance of the battery cell (3, 4, 5, 6, 7) with the lowest efficiency $\eta_{min}$ is determined.

10. Method according to one of the previous claims, **characterised in that** the cell voltages of the battery cells (3, 4, 5, 6, 7) are measured regularly after the cell block has been charged.

11. Method according to one of the previous claims, **characterised in that** at certain intervals immediately after charging the cell block the cell voltage $U_{Z,N}$ of all battery cells (3, 4, 5, 6, 7) is determined and compared with the end-of-charge voltage $U_{L,N}$, and that in the event of a deviation of the cell voltage $U_{Z,N}$ of a battery cell (3, 4, 5, 6, 7) from its end-of-charge voltage $U_{L,N}$ by more than a specified limit value the energy or the power $E_{taken,N}$, that is taken from the relevant battery cell (3, 4, 5, 6, 7) or all other battery cells for the adjustment of its efficiency to the efficiency $\eta_{min}$, is adjusted.

12. Method according to claim 11, **characterised in that** in the event of a deviation of the cell voltage $U_{Z,N}$ of the battery cell (3, 4, 5, 6, 7) with the lowest efficiency $\eta_N = \eta_{min}$ from the end-of-charge voltage $U_{L,N}$ by more than a specified limit value, the energy or the power $E_{taken,N}$, that is taken from all other battery cells (3, 4, 5, 6, 7) for the adjustment of its efficiency to the efficiency $\eta_{min}$, is adjusted.

13. Method according to claim 11 or 12, **characterised in that** in the event of a deviation of the cell voltage $U_{Z,N}$ of a battery cell (3, 4, 5, 6, 7), for which $\eta_N > \eta_{min}$ previously applied, from the end-of-charge voltage $U_{L,N}$ by more than a specified limit value, the energy or power $E_{taken,N}$ taken from this battery cell (3, 4, 5, 6, 7) for the adjustment of the efficiency is reduced to $E_{taken,N}'$, such that in future $\Delta U_N = 0$ applies for the voltage difference $\Delta U_N = U_{L,N} - U_{Z,N}$.

14. Method according to claim 13, **characterised in that** in the case of a battery cell (3, 4, 5, 6, 7), for which $\eta_N > \eta_{min}$ previously applied and for which it is found that the voltage difference is $\Delta U_N = U_{L,N} - U_{Z,N} > 0$ despite a reduction to $E_{taken,N}' = 0$, this battery cell (3, 4, 5, 6, 7) is henceforth defined as the battery cell with the lowest efficiency $\eta_{min}'$, and that the efficiencies of all other battery cells (3, 4, 5, 6, 7) are adjusted to this new lowest efficiency $\eta_{min}'$.

15. Method according to one of the previous claims, **characterised in that** the charging current or the discharging current is stepped at least once while the cell block (2) is being charged or discharged, that a resulting step change in the cell voltage is recorded as a voltage response for all battery cells (3, 4, 5, 6, 7) and compared with one another for the battery cells (3, 4, 5, 6, 7), and that the energy or the power $E_{taken,N}$, that is taken from a battery cell (3, 4, 5, 6, 7) or multiple battery cells (3, 4, 5, 6, 7) for the adjustment of its efficiency to the efficiency $\eta_{min}$, is adjusted if, for at least one battery cell (3, 4, 5, 6, 7), the step change in the cell voltage deviates quantitatively from the changes in the cell voltages of the other battery cells (3, 4, 5, 6, 7) by more than a specified limit value.

16. Method according to claim 15, **characterised in that** in the event of a deviation of the step change in the cell voltage of the battery cell (3, 4, 5, 6, 7) with the lowest efficiency $\eta_N = \eta_{min}$ from the changes in the cell voltages of the other battery cells by more than a specified limit value, the energy or the power $E_{taken,N}$, that is taken from all other battery cells (3, 4, 5, 6, 7) for the adjustment of its efficiency to the efficiency $\eta_{min}$, is adjusted.

17. Method according to claim 15 or 16, **characterised in that** in the event of a deviation of the step change in the cell voltage of a battery cell (3, 4, 5, 6, 7), for which $\eta_N > \eta_{min}$ previously applied, from the step change of the other battery cells (3, 4, 5, 6, 7) by more than a specified limit value, the energy or the power $E_{taken,N}$, that is taken from this battery cell (3, 4, 5, 6, 7) for the adjustment of its efficiency, is reduced to $E_{taken,N}$' such that in the event of a step change in the charging or discharging current in the future the step change in the cell voltage of this battery cell (3, 4, 5, 6, 7) essentially corresponds to the step changes in the cell voltages of the other battery cells (3, 4, 5, 6, 7).

18. Method according to claim 17, **characterised in that** in the case of a battery cell for which $\eta_N > \eta_{min}$ previously applied and for which it is found that the step change in the cell voltage of this battery cell (3, 4, 5, 6, 7) as a response to a step change in the charging current or discharging current is greater than the step changes in the cell voltages of the other battery cells (3, 4, 5, 6, 7) by more than a specified limit value despite a reduction to $E_{taken,N}$' = 0, this battery cell (3, 4, 5, 6, 7) is henceforth defined as the battery cell with the lowest efficiency $\eta_{min}$', and that the efficiencies of all other battery cells (3, 4, 5, 6, 7) are adjusted to this new lowest efficiency $\eta_{min}$'.

19. Method according to one of the previous claims, **characterised in that** the efficiency is adjusted using switchable resistors $R_N$, whereby each battery cell is equipped with a switchable resistor.

20. Method according to claim 19, **characterised in that** the resistor $R_N$ (8, 9, 10, 11, 12) of the battery cells (3, 4, 5, 6, 7) is set such that for each combination of battery cell (3, 4, 5, 6, 7) and associated switchable resistor (8, 9, 10, 11, 12) the efficiency is $\eta_N$' = $\eta_{min}$.

21. Method according to claim 19 or 20, **characterised in that** the switchable resistors (8, 9, 10, 11, 12) are only connected in parallel over a period of time of the charging process or discharging process of the battery cells (3, 4, 5, 6, 7).

22. Method according to claim 21, **characterised in that** the duration of the period of time for each battery cell (3, 4, 5, 6, 7) is set such that for each combination of battery cell (3, 4, 5, 6, 7) and associated switchable resistor (8, 9, 10, 11, 12) the efficiency is $\eta_N$' = $\eta_{min}$.

23. Method according to one of the previous claims, **characterised in that** the efficiency is adjusted using DC-DC converters, wherein each battery cell (3, 4, 5, 6, 7) is equipped with one DC-DC converter and the DC-DC converter is set such that for each combination of battery cell (3, 4, 5, 6, 7) and DC-DC converter the efficiency is $\eta_N$' = $\eta_{min}$.

**Revendications**

1. Procédé pour charger et/ou décharger un accumulateur d'énergie (1) avec un courant $I_0$, l'accumulateur (1) comprenant au moins un bloc de cellules (2) avec un nombre J de cellules (3, 4, 5, 6, 7) montées en série, dont certaines (3, 4, 5, 6, 7) au moins peuvent se caractériser par des rendements $\eta_N$ différents, $1 \leq N \leq J$, le procédé englobant les opérations suivantes :

   - Détermination de la cellule (3, 4, 5, 6, 7) ayant le plus faible rendement $\eta_{min}$,
   - Adaptation du rendement $\eta_N$ de toutes les autres cellules (3, 4, 5, 6, 7) à ce plus faible rendement $\eta_{min}$, de telle sorte que le rendement ajusté $\eta_N$' des cellules remplisse la condition suivante : $\eta_N$' = $\eta_{min}$.

2. Procédé selon la revendication 1, **caractérisé en ce que**, avant l'adaptation des rendements $\eta_N$ à $\eta_{min}$, la cellule (3, 4, 5, 6, 7) ayant le plus faible rendement $\eta_{min}$, est déterminée à travers la charge, dans un premier temps, de toutes les cellules (3, 4, 5, 6, 7) du bloc (2) à la tension de fin de charge, puis à travers la décharge du bloc (2) jusqu'à ce qu'une part définie de sa capacité nominale soit déchargée, ensuite à travers la recharge du bloc (2) jusqu'à ce qu'au moins une cellule (3, 4, 5, 6, 7) ait atteint la tension de fin de charge et, pour finir, ce procédé est **caractérisé en ce que** la cellule (3, 4, 5, 6, 7) ayant le plus faible rendement $\eta_{min}$ est déterminée comme cellule ayant la plus petite tension Uzmin parmi toutes les cellules (3, 4, 5, 6, 7).

3. Procédé selon la revendication 2, **caractérisé en ce que**, à la fin de la charge du bloc de cellules, la tension cellulaire $U_{Z0,N}$ est déterminée pour toutes les cellules (3, 4, 5, 6, 7) et **en ce que** pour chacune des cellules (3, 4, 5, 6, 7) l'énergie ou la puissance $E_{prélèvement,N}$ prélevée lors de la charge ou de la décharge de la cellule (3, 4, 5, 6, 7) correspondante, est déterminée à partir de la différence $U_{Z0,N}$ - Uzmin de telle sorte que le rendement ainsi adapté $\eta_N$' corresponde au rendement $\eta_{min}$.

4. Procédé selon la revendication 3, **caractérisé en ce que** les tensions cellulaires $U_{Z0,N}$ ou les rendements $\eta_N$ dérivés de ces tensions sont mémorisés.

5. Procédé selon la revendication 1, **caractérisé en ce que**, avant l'adaptation des rendements $\eta_N$ à $\eta_{min}$, la cellule ayant le plus faible rendement $\eta_{min}$ est déterminée à travers la charge du bloc (2) et **en ce que**, pendant la charge du bloc (2) un courant $I_0$ change au moins une fois brusquement, **caractérisé en ce que** dans toutes les cellules (3, 4, 5, 6, 7) la tension avant, pendant et après le changement brusque du courant de charge $I_0$ est relevé lors d'un intervalle de temps, **caractérisé en ce que** pour chaque cellule (3, 4, 5, 6, 7) la différence $U_{N,\text{saut de courant}}$ entre la tension cellulaire la plus grande $U_{N,\text{max}}$ et la tension cellulaire la plus petite $U_{N,\text{min}}$ est formée pendant ce laps de temps, avec $U_{N,\text{saut de courant}} = U_{N,\text{max}} - U_{N,\text{min}}$, et **caractérisé en ce que** la cellule (3, 4, 5, 6, 7) ayant le plus faible rendement $\eta_{\text{min}}$, est déterminée comme la cellule (3, 4, 5, 6, 7) pour laquelle la différence $U_{N,\text{saut de courant}}$ est la plus grande, avec $U_{\text{saut de courant,max}}$.

6. Procédé selon la revendication 1, **caractérisé en ce que**, avant l'adaptation des rendements $\eta_N$ à $\eta_{\text{min}}$, la cellule ayant le plus faible rendement $\eta_{\text{min}}$ est déterminée à travers la décharge du bloc (2) et que, pendant la décharge du bloc un courant de décharge $I_0'$ change au moins une fois brusquement, **caractérisé en ce que** dans toutes les cellules (3, 4, 5, 6, 7) la tension avant, pendant et après le changement brusque du courant de décharge $I_0'$ est relevé lors d'un intervalle de temps, **caractérisé en ce que** pour chaque cellule (3, 4, 5, 6, 7) la différence $U_{N,\text{saut de courant}}$ entre la tension cellulaire la plus grande $U_{N,\text{max}}$ et la tension cellulaire la plus petite $U_{N,\text{min}}$ est formée pendant ce laps de temps, avec $U_{N,\text{saut de courant}} = U_{N,\text{max}} - U_{N,\text{min}}$, et **caractérisé en ce que** la cellule (3, 4, 5, 6, 7) ayant le plus faible rendement $\eta_{\text{min}}$ est déterminée comme la cellule (3, 4, 5, 6, 7) pour laquelle la différence $U_{N,\text{saut de courant}}$ est la plus grande, avec $U_{\text{saut de courant,max}}$.

7. Procédé selon la revendication 5 ou 6, **caractérisé en ce que**, à partir de la différence $U_{\text{saut de courant,max}}$ et $U_{N,\text{saut de courant}}$ pour chacune des cellules (3, 4, 5, 6, 7) est déterminée l'énergie ou la puissance $E_{\text{prélèvement,N}}$ prélevée lors de la charge ou de la décharge de la cellule correspondante de telle sorte que son rendement ajusté $\eta_N'$ corresponde au rendement $\eta_{\text{min}}$.

8. Procédé selon la revendication 3 ou 7, **caractérisé en ce que** pour chaque cellule (3, 4, 5, 6, 7) est mémorisée l'énergie ou la puissance $E_{\text{prélèvement,N}}$ prélevée lors de la charge ou de la décharge de la cellule (3, 4, 5, 6, 7) correspondante de telle sorte que son rendement ajusté $\eta_N'$ corresponde au rendement $\eta_{\text{min}}$.

9. Procédé selon l'une des revendications précédentes, **caractérisé en ce que** la capacité de la cellule (3, 4, 5, 6, 7) ayant le plus faible rendement $\eta_{\text{min}}$ est déterminée.

10. Procédé selon l'une des revendications précédentes, **caractérisé en ce que** les tensions des cellules (3, 4, 5, 6, 7) sont régulièrement mesurées après la charge du bloc.

11. Procédé selon l'une des revendications précédentes, **caractérisé en ce que**, à certains intervalles, immédiatement après la recharge du bloc de cellules, la tension cellulaire $U_{Z,N}$ de toutes les cellules (3, 4, 5, 6, 7) est déterminée et comparée à la tension de fin de charge $U_{L,N}$, et qu'en cas de divergence de la tension $U_{Z,N}$ d'une cellule (3, 4, 5, 6, 7) par rapport à sa tension de fin de charge $U_{L,N}$ d'une valeur supérieure à la valeur limite prédéfinie, est ajustée l'énergie ou la puissance $E_{\text{prélèvement,N}}$ prélevée de la cellule concernée (3, 4, 5, 6, 7) ou de toutes les autres cellules en vue de l'adaptation du rendement au rendement $\eta_{\text{min}}$.

12. Procédé selon la revendication 11, **caractérisé en ce que**, en cas de divergence de la tension $U_{Z,N}$ de la cellule (3, 4, 5, 6, 7) ayant le plus faible rendement $\eta_N = \eta_{\text{min}}$, par rapport à la tension de fin de charge $U_{L,N}$ d'une valeur supérieure à la valeur limite prédéfinie, est ajustée l'énergie ou la puissance $E_{\text{prélèvement,N}}$ prélevée de toutes les autres cellules (3, 4, 5, 6, 7) en vue de l'adaptation du rendement au rendement $\eta_{\text{min}}$.

13. Procédé selon la revendication 11 ou 12, **caractérisé en ce que**, en cas de divergence de la tension $U_{Z,N}$ d'une cellule (3, 4, 5, 6, 7), pour laquelle $\eta_N > \eta_{\text{min}}$ était valable jusqu'ici, par rapport à la tension de fin de charge $U_{L,N}$ d'une valeur supérieure à la valeur limite prédéfinie, l'énergie ou la puissance $E_{\text{prélèvement,N}}$ prélevée de cette cellule (3, 4, 5, 6, 7) en vue de l'adaptation du rendement, est réduite à $E_{\text{prélèvement,N}}'$ de telle sorte que la future différence de tension $\Delta U_N = U_{L,N} - U_{Z,N}$ remplisse la condition $\Delta U_N = 0$.

14. Procédé selon la revendication 13, **caractérisé en ce que** pour une cellule (3, 4, 5, 6, 7), pour laquelle $\eta_N > \eta_{\text{min}}$ était valable jusqu'ici et pour laquelle on constate que, même en cas de réduction à $E_{\text{prélèvement,N}}' = 0$, la différence de tension $\Delta U_N = U_{L,N} - U_{Z,N}$ est $> 0$, cette cellule (3, 4, 5, 6, 7) est définie comme la cellule ayant le plus faible rendement $\eta_{\text{min}}'$ et que les rendements de toutes les autres cellules (3, 4, 5, 6, 7) sont adaptés à ce nouveau plus faible rendement $\eta_{\text{min}}'$.

15. Procédé selon l'une des revendications précédentes, **caractérisé en ce que**, lors de la charge ou de la décharge du bloc de cellules (2), le courant de charge ou de décharge est changé au moins une fois brusquement, et qu'une variation brusque de la tension cellulaire qui en résulte est relevée comme réponse de tension pour toutes les cellules (3, 4, 5, 6, 7) et comparée pour les cellules (3, 4, 5, 6, 7) entre elles, et **caractérisé en ce que** l'énergie ou la puissance $E_{\text{prélèvement,N}}$ prélevée d'une cellule (3, 4, 5, 6, 7) ou de plusieurs cellules (3, 4, 5, 6, 7) en vue de l'adaptation du rendement au rendement $\eta_{min}$, est ajustée, si pour au moins une cellule (3, 4, 5, 6, 7) la variation brusque de la tension s'écarte quantitativement d'une valeur supérieure à la valeur limite prédéfinie des variations de tension des autres cellules (3, 4, 5, 6, 7).

16. Procédé selon la revendication 15, **caractérisé en ce que**, en cas de divergence de la variation brusque de la tension de la cellule (3, 4, 5, 6, 7) ayant le plus faible rendement $\eta_N = \eta_{min}$ par rapport aux variations de tension des autres cellules d'une valeur supérieure à la valeur limite prédéfinie, est ajustée l'énergie ou la puissance $E_{prélèvement,N}$ prélevée de toutes les autres cellules (3, 4, 5, 6, 7) en vue de l'adaptation du rendement au rendement $\eta_{min}$.

17. Procédé selon la revendication 15 ou 16, **caractérisé en ce que**, en cas de divergence de la variation brusque de la tension d'une cellule (3, 4, 5, 6, 7) pour laquelle $\eta_N > \eta_{min}$ s'appliquait jusqu'ici, par rapport à la variation brusque des autres cellules (3, 4, 5, 6, 7) d'une valeur supérieure à la valeur limite prédéfinie, l'énergie ou la puissance $E_{prélèvement,N}$ prélevée de cette cellule (3, 4, 5, 6, 7) en vue de l'adaptation du rendement est réduite à $E_{prélèvement,N}'$ de telle sorte qu'en cas de future variation brusque du courant de charge ou de décharge, le changement brusque de la tension de cette cellule (3, 4, 5, 6, 7) corresponde pour l'essentiel aux variations brusques des tensions des autres cellules (3, 4, 5, 6, 7).

18. Procédé selon la revendication 17, **caractérisé en ce que**, pour une cellule pour laquelle $\eta_N > \eta_{min}$ s'appliquait jusqu'ici et pour laquelle on constate que, même en cas de réduction à $E_{prélèvement,N}' = 0$, la variation brusque de la tension de cette cellule (3, 4, 5, 6, 7) comme réponse à une variation brusque du courant de charge ou de décharge est plus grande que les variations brusques des tensions des autres cellules (3, 4, 5, 6, 7) d'une valeur supérieure à la valeur limite définie, cette cellule (3, 4, 5, 6, 7) est désormais définie comme la cellule ayant le plus faible rendement $\eta_{min}'$, et que les rendements de toutes les autres cellules (3, 4, 5, 6, 7) sont adaptés à ce nouveau plus faible rendement $\eta_{min}'$.

19. Procédé selon l'une des revendications précédentes, **caractérisé en ce que** l'adaptation du rendement s'effectue avec des résistances $R_N$ commutables, chaque cellule étant dotée d'une résistance commutable.

20. Procédé selon la revendication 19, **caractérisé en ce que** la résistance $R_N$ (8, 9, 10, 11, 12) des cellules (3, 4, 5, 6, 7) est réglée de telle façon que pour chaque combinaison de cellule (3, 4, 5, 6, 7) et de la résistance commutable associée (8, 9, 10, 11, 12), le rendement est $\eta_N' = \eta_{min}$.

21. Procédé selon la revendication 19 ou 20, **caractérisé en ce que** les résistances commutables (8, 9, 10, 11, 12) ne sont commutées en parallèle que pendant un intervalle de temps du processus de charge ou de décharge des cellules (3, 4, 5, 6, 7).

22. Procédé selon la revendication 21, **caractérisé en ce que** la durée de l'intervalle de temps pour chaque cellule (3, 4, 5, 6, 7) est réglée de telle façon que pour chaque combinaison de cellule (3, 4, 5, 6, 7) et de la résistance commutable associée (8, 9, 10, 11, 12) le rendement est $\eta_N' = \eta_{min}$.

23. Procédé selon l'une des revendications précédentes, **caractérisé en ce que** l'adaptation du rendement s'effectue avec des convertisseurs DC-DC, chaque cellule (3, 4, 5, 6, 7) étant équipée d'un convertisseur DC-DC, et que ce dernier est réglé de telle sorte que pour chaque combinaison de cellule (3, 4, 5, 6, 7) et de convertisseur DC-DC le rendement remplisse la condition $\eta_N' = \eta_{min}$.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017009850 A1
- DE 102015202939 A1
- EP 2966751 A1